# EUROPEAN PATENT APPLICATION

(11) **EP 0 867 269 A1**
(43) Date of publication of application: **30.09.1998**
(21) Application number: 98302240.1
(22) Date of filing: 25.03.1998
(51) Int. Cl.: B29C 67/00

(54) **Manufacture of a flexible multilayered article by a laminating process**

(30) Priority: 26.03.1997 GB 9706273
(71) Applicant: THE STANDARD PRODUCTS COMPANY, Cleveland Ohio 44102 (US)
(72) Inventor: Bird, Douglas Robert, Buntingford, Herts SG9 9TD (GB)
(74) Representative: Bond, Bentley George

(57) **Abstract**

There is disclosed a method of manufacturing a flexible multi-layered article by a laminating process, which method comprises in any order carrying out more than once the step of cutting an individual layer of the desired multi-layered article, carrying out more than once the step bonding two or more individual layers of the desired multi-layered article to one another. The individual layers are formed from a sheet of EPDM as an elastomeric material.

## Description

This invention relates to the manufacture of a flexible multi-layered article by a laminating process.

In US-A-4752352, there is described a method for forming a three-dimensional article by laminating layers of the same or a gradually varying shape, the layers being formed from a sheet material. By such a method, layers of adhesive-backed paper can be formed into a hard and brittle three-dimensioned article.

According to the present invention, there is provided a method of manufacturing a flexible multi-layered article by a laminating process, which method comprises in any order:
(1) carrying out more than once the step of cutting an individual layer of the desired multi-layered article; and
(2) carrying out more than once the step bonding two or more individual layers of the desired multi-layered article to one another;
wherein the individual layers are formed from a sheet of elastomeric material.

Reference will be made, by way of example, to the accompanying drawings in which:
Figure 1 schematically illustrates the manufacture of a multi-layered article by a laminating technique;
Figure 2 is a sectional view of a laminated sheet material for use in the process illustrated in Figure 1; and
Figure 3 is a plan view of the laminated sheet material shown in Figure 2.

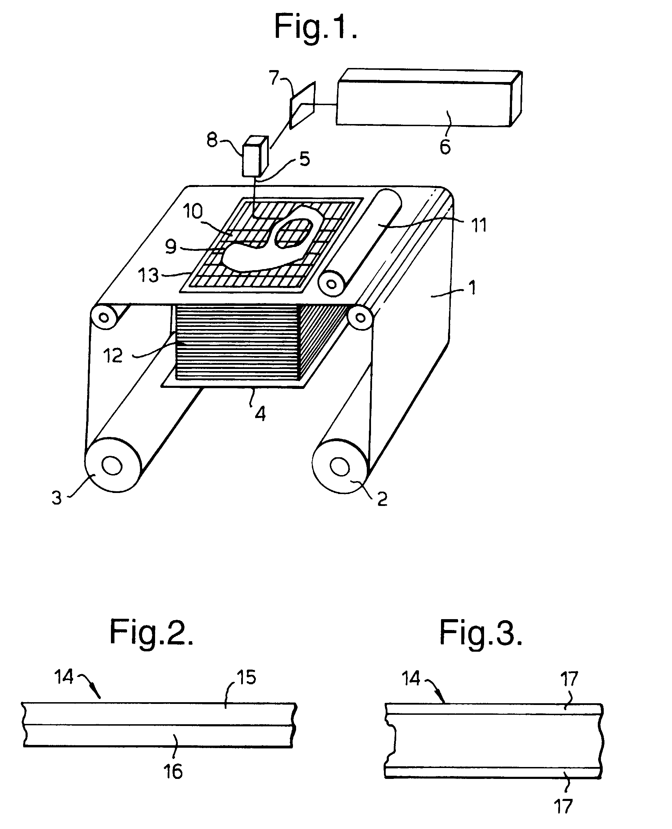

Referring to Figure 1, the material for use in the process of manufacturing a multi-layered article by a laminating process is a roll of sheet material 1, namely a roll of adhesive backed paper such as bleached and coated kraft paper. A length of the sheet material 1 is stretched, from a supply roll 2 to a take-up roll 3, over a support platform 4, and a laser beam 5, produced by a laser 6 and directed to the sheet material 1 via a mirror 7 and a movable optical head 8, traces the required shape 9 in the sheet material 1, by burning a line through the layer of sheet material 1. If desired, unwanted areas of the sheet material 1 are cross hatched by the laser beam 5 to form tiles 10, to ease in the removal of waste areas later. When this step is complete, a heated roller 11 bonds the layer of sheet material 1 to the platform 4 (or to an underlying layer of sheet material 1), the platform 4 is lowered to detach the shaped cut-out layer from the roll of sheet material 1, the rolls 2 and 3 position a new section of the paper above the platform 4. The platform 4 is then raised, and the process is repeated many times to form a multi-layered stack 12.

When the multi-layered stack 12 is complete, it is prised mechanically from the platform 4, and the waste material is removed to form the desired multi-layered article. The finished article, after light sanding and treating with a lacquer to prevent moisture ingress and distortion, resembles wood. This makes the article popular with traditional pattern makers.

In more detail, the above process comprises the following steps:
(1) the stack 12 is lowered below the path of the sheet material 1;
(2) the sheet material 1 is advanced until a fresh section of it is positioned above the stack 12;
(3) the platform 4 is raised until the stack 12 contacts the fresh section of the sheet material 1;
(4) the heated roller 11 heats and compresses the fresh section of the sheet material 1, to bond it to the stack 12;
(5) a measurement is made of the cumulative height of the stack 12;
(6) the shape of the fresh section of the sheet material 1 to be cut is calculated by reference to a CAD model (computer aided design model) ;
(7) the laser beam 5 traces a rectangular path 13 in the sheet material 1, so that this rectangle 13 becomes detached from the sheet material 1;
(8) the laser beam 5 traces the shape 9 in one or more of the layers of the sheet material 1;
(9) the laser beam 5 cuts the area outside the line 9 but within the rectangle 13 into tiles 10; and
(10) the laser beam 5 cuts cross hatching in waste areas vertically adjacent to the desired article.

As indicated above, the stack 12 is then removed from the platform 4, and the waste material is removed to form the desired multi-layered article of the required three dimensional shape.

Figures 2 and 3 show a two layered strip material 14 suitable for use, in accordance with the present invention, as the sheet material 1 in the process illustrated in Figure 1.

As shown in Figures 2 and 3, the two layered strip material 14 consists of a layer 15 of fully or partially cured ethylene propylene diene rubber (EPDM) which is, for example, 50 to 350mm in width and from 0.05mm to 0.5mm, preferably 0.125mm, in thickness, and a layer 16 of uncured EPDM which is, for example, from 0.001mm to 0.125mm in thickness. The uncured layer 16 is applied to the layer 15 either as a strip or as a spray on dispersion of EPDM in a solvent. This uncured layer 16 allows bonding between the stacked layers of the sheet material 14 upon application of heat and pressure by the heated roller 11, to be achieved. The vulcanisation of the layer 15 to the layer 16 produces a stack 12 that is made of one material, i.e. EPDM, rather than a laminate of different materials.

As shown in Figure 3, the sheet material 14 may be provided with strips 17 of tape along its edges, to support the strip material 14.

The tape 17 is applied at the time that the layer of cured EPDM is made, to stop the strip material 14 from stretching when the strip material 14 is used.

In an alternative embodiment, the layer 16 of uncured EPDM is replaced by a low melting plastics material which, on cooling, bonds to the layer 15 of the layer of sheet material 14 beneath it.

In the embodiments described with reference to Figures 2 and 3, the layer 15 is made of cured EPDM. However, this material can be replaced by other thermoplastic and thermosetting elastomers, such as ethylene propylene rubber (EPM), natural rubber (NR), styrene butadiene rubber (SBR), acrylonitrile butadiene rubber (NBR), isoprene isobutylene rubber (IIR) and polychloroprene rubber (CR). Preferably, the elastomer of the layer 15 is the same as the elastomer of the layer 16 so that, as noted above in the case of EPDM, the resulting stack 12 is made of one material.

The layer 15 may contain conventional additives such as carbon black.

The diene used to make the ethylene propylene diene rubber is used, for example, 5-ethylidene-2-norbornene, dicyclopentadiene or 1,4-hexadiene.

The hardness of the layer 15 is, for example, from 30 Shore A to 90 Shore A or from 20 Shore D to 50 Shore D.

The solvent for use in forming the layer 16 is, for example, toluene, carbon disulphide or carbon tetrachloride. Alternatively, a water based dispersion could be used.

The low melting plastics material of the layer 16 could be polyethylene as an alternative to EPDM.

The tape 17 can be made of, for example, woven glass tape or linen tape. The tape 17 must not stretch, and must withstand heat.

The sheet material 14 shown in Figures 2 and 3 is used in the process described with reference to Figure 1, in place of the sheet material 1 used in the process described with reference to Figure 1. In this way, by the present invention, it is possible to produce a flexible multi-layered article of the desired three dimensional shape.

In carrying out the process, the laser beam 5 is focussed so that it cuts only the uppermost layer of sheet material 14, unless of course it is desired to cut at the same time two or more layers of the sheet material 14.

## Claims

1. A method of manufacturing a flexible multi-layered article by a laminating process, which method comprises in any order:
(1) carrying out more than once the step of cutting an individual layer of the desired multi-layered article; and
(2) carrying out more than once the step bonding two or more individual layers of the desired multi-layered article to one another;
wherein the individual layers are formed from a sheet of EPDM as an elastomeric material.

2. A method according to claim 1 wherein the individual layers of EPDM are bonded to one another by a layer of uncured EPDM which is cured to bond the layers to one another.

3. A method according to claim 1 wherein the individual layers of EPDM are bonded to one another by a layer of a low melting plastics material such as polyethylene.

4. A method according to any of claims 1 to 3, wherein the individual layers are cut by a laser beam.
